# EUROPEAN PATENT SPECIFICATION

(11) **EP 2 615 288 B1**
(45) Date of publication and mention of the grant of the patent: **12.04.2017**
(21) Application number: 12198142.7
(22) Date of filing: 19.12.2012
(51) Int. Cl.: F02G 5/02, F01K 23/06, F01K 23/14

(54) **Construction equipment equipped with an energy recovery apparatus**
Mit einer Energierückgewinnungsvorrichtung ausgestattete Baumaschine
Équipement de construction équipé d'un appareil de récupération d'énergie

(30) Priority: 21.12.2011 IT TO20111184
(43) Date of publication of application: 17.07.2013
(73) Proprietor: Soilmec S.p.A., 47522 Cesena (IT)
(72) Inventor: Casadei, Marco, 47522 Cesena (FC) (IT); Ditillo, Alessandro, 47522 Cesena (FC) (IT); Morellini, Massimo, 47522 Cesena (FC) (IT)
(74) Representative: Lotti, Giorgio

(56) References cited:
- DE-A1- 3 234 679
- US-A1- 2007 074 515
- US-A1- 2010 180 584

## Description

### Technical field

The present invention relates to construction equipment.

More specifically, the present invention relates to construction equipment according to the preamble of the accompanying claim 1.

### Technological background

The use of construction machines (known in English by the term "construction equipment") is widely known in the prior art, with reference to self-propelled means, equipment or operating machines devised for executing activities in the construction sector, such as the execution of excavations or drilling, for example.

By way of example, some types of construction equipment are listed below, such as drilling machines for consolidations, for the driving of structural elements into the ground, lifting cranes and excavator machines, internal drilling machines or tunnel digging machines, external electric and/or hydraulic power generating units (known in English by the term "power-packs") propaedeutic to the previous applications. Such equipment can also adopt a main static working condition in which they operate, for example for an excavation, a piling and so forth, remaining in position in a predetermined zone and resulting static or in any case non translating within the main operating cycle. The above-mentioned construction equipment is, however, equipped with crawler tracks that allow them to move at very low speed, generally less than 5 km/hr between a first working position and a second working position generally close to the preceding position. They are therefore to be considered as separate from the "vehicles" in general or from the operating vehicles (e.g. lorries) that are generally tyred and perform their main function at high-speed motion.

Construction equipment typically comprise an internal combustion engine arranged to generate mechanical power and emit exhaust gases, a pumping system arranged to use the above-mentioned mechanical power to pressurize a working fluid, and at least one fluidic control circuit arranged to receive the pressurized working fluid and deliver it to at least one actuator or motor. In construction equipment, a liquid such as oil and in particular hydraulic oil, is commonly employed as a working fluid. Consequently, the motors and actuators are generally of the hydraulic type. Certain applications are also made with different fluidic means or energy carriers, such as for example air or electric current.

In summary, the construction equipment exploits the internal combustion engine as generator of mechanical power generator which is then transferred to a pumping system that transfers it to a working fluid, supplying it to the fluidic motors and actuators to control the various equipment components.

Nevertheless, construction equipment made according to the state of the art has a number of drawbacks.

One drawback is provided in that, in operation, the internal combustion engine develops a significant amount of heat that is not converted into mechanical power to be transferred to the pumping system. Instead, the above-mentioned amount of heat is simply dissipated into the surrounding environment, and at least in part, in the form of heat transferred to a cooling system or radiator associated with the internal combustion engine, and in the form of exhaust gases emitted at a high temperature. Such a radiator associated with the engine allows generation of a flow of air that flows around the motor and promotes heat exchange for the regulation of the temperature.

The overall efficiency of construction equipment produced according to the prior art is therefore strongly penalized by the heat dissipated by the internal combustion engine during operation. Purely by way of example, typically only about 30% of the energy input into the system by the fuel is converted into mechanical energy to the crankshaft, while the remaining energy is dissipated.

The above-mentioned equipment being substantially static, they are greatly affected by these types of problems since they are not subject to a forced flow of air originating from the high-speed motion as for example occurs for motor vehicles In addition, this equipment sometimes finds itself operating in closed environments, inside existing buildings or inside tunnels where the problem becomes increasingly serious in that the heat exchange with the surrounding environment takes place under difficult environmental conditions (let us consider the problem of increasing the temperature of internal work zones or of the problems arising from the presence of dust or aggressive environments that require additional dissipative filtering systems).

In the motor vehicle sector, a sector to be in any case considered outside the field of application of the present invention, the patent publication WO 2011/085868 A1 is known, wherein a thermodynamic cycle is used, which is arranged to convert a fraction of the heat presented by the exhaust gases emitted by an internal diesel combustion engine into mechanical power. The thermodynamic cycle exploited for the energy recovery is a Rankine cycle, in particular an Organic Rankine cycle (abbreviated with the acronym ORC), which uses a substance of organic origin with a high molecular weight as a working fluid. The mechanical power recovered by the thermodynamic cycle is returned to the internal combustion engine of the motor vehicle, through a suitable transmission mechanism with variable gear ratio which transfers it directly to the output shaft of the combustion engine.

Nevertheless, from the point of view of the actual energy recovery, the configuration disclosed in the WO 2011/085868 A1 document is not optimal for use in the construction equipment sector.

For example, transmission mechanisms with variable ratio are generally more complex and delicate. In use in construction equipment, they would be subject to numerous stresses due to the type of activities carried out by the above equipment (for example, drilling, lifting, excavation, etc.) and would therefore appear a significant risk of malfunction, interfering with the normal operation of the output shaft. This condition may entail significant periods of downtime for the internal combustion engine due to the need of repair, and thus periods in which said construction equipment is not operational. Moreover, in order to adapt the construction equipment of a known type to a transmission mechanism with variable ratio, a substantial and structural modification of the motorization would be required with consequent problems in the supply of the specially adapted version, additional costs, longer delivery times and difficulty in locating spare parts throughout the global market.

In fact the endothermic engines generally used within the scope of construction equipment, are indicated in the sector as belonging to the "industrial" series since they are already shaped differently with respect to those of the "automotive" series, taking into account the different uses. For example, in the construction equipment sector, the cooling system is different due to the lack of speed adopted by the equipment. Also vibrations are present, and more in general such equipment is in a completely different usage environment. The problem of lack of a forced air flow and that of the presence of extremely difficult working conditions must thus be solved.

Thus using, in construction equipment, endothermic engines having standards outwith those normally used in the sector heavily penalizes the future market of these devices.

Document US 2010/180584 describes a drive train for motor vehicles, as trucks, construction machines, buses etc. comprising an internal combustion engine which generates mechanical power and exhaust gas stream and a steam cycle which is operated at least partly with heat obtained during the operation of the internal combustion engine. In particular, the steam cycle is capable of converting at least a fraction of such heat into auxiliary mechanical power giving it back to the combustion engine.

Document DE 32 34 679 describes a propulsion unit comprising a primary motor, an internal combustion engine, and a secondary motor which is arranged to operate by using the heat produced by the primary motor. The secondary motor, in particular, is capable of converting at least a fraction of the heat into auxiliary mechanical power that is then converted into electrical power.

### Summary of the invention

One aim of the present invention is that of producing construction equipment able to solve this and other drawbacks of the prior art, and which can be, at the same time, simply and economically produced.

Another aim of the present invention is that of producing construction equipment presenting improved efficiency with respect to what occurs in the systems produced according to the prior art.

According to an advantageous aspect of the present invention, the above-mentioned efficiency is improved by reducing the heat inside the structure containing at least the internal combustion engine.

In fact, a further aim of the present invention is that of reducing the amount of heat inside the engine compartment of the equipment and consequently the heat that it leaves into the external environment.

According to the present invention, this and other aims are achieved by means of construction equipment having the characteristics set forth in the accompanying claim 1.

It is to be understood that the accompanying claims are an integral part of the technical instructions provided in the description in relation to the present invention.

### Brief description of the drawings

Further characteristics and advantages of the present invention will become clear from the detailed description which follows, provided purely by way of a non-limiting example, with reference to the accompanying drawings, wherein:
- - figure 1 is a schematic view of a construction equipment, in particular a drilling machine, according to one exemplary embodiment of the present invention;
   - figure 2 is a block diagram relating to the equipment shown in figure 1;
   - figure 3 is a schematic view of an energy recovery apparatus associated with the equipment shown in the preceding figures;
   - figure 4 is a schematic view of an energy recovery apparatus associated with construction equipment according to a second embodiment of the present invention;
   - figure 5 is a schematic view of an energy recovery apparatus associated with construction equipment according to a third embodiment of the present invention; and
   - figure 6 is a schematic view of a displaying device applicable to construction equipment according to the embodiments of the preceding figures.

### Detailed description of the invention

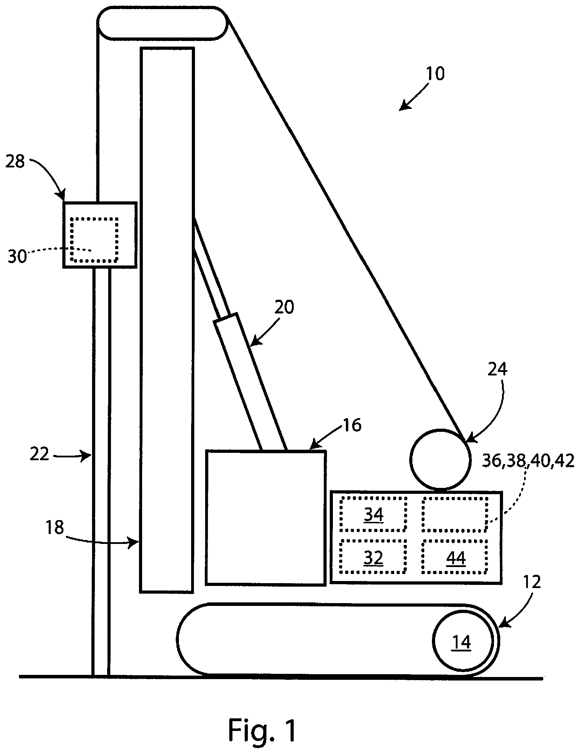

With reference in particular to figure 1, construction equipment according to one exemplary embodiment of the present invention is schematically illustrated and generally indicated by 10.

In the illustrated embodiment, the construction equipment is a drilling equipment 10. As will be clear to a person skilled in the art in the light of the present description, the construction equipment can also be of a type other than the type illustrated, for example a lifting crane, a digger machine, a piling machine, etc.

With reference in particular to the embodiment illustrated in figure 1, the drilling equipment 10 comprises a supporting crawler group 12 that is actionable by means of a first fluidic motor device 14 to allow the handling of the equipment 10, and a turret or cabin 16 mounted on the crawler unit 12, for example in a rotatable manner with respect to the latter. Furthermore, the equipment 10 comprises a mast or guiding tower 18 oscillatable by means of a first fluidic actuator device 20, for example a hydraulic cylinder, between a substantially horizontal distended or resting position (not illustrated) and an upright or substantially vertical working position (figure 1).

The equipment 10 further comprises an excavator tool or drilling rod 22 that is translatable in a guided manner along the mast 18 by means of an associated winch unit 24 activated by a second fluidic motor device 26, and to be controlled in rotation by a rotary table 28 activated in rotation by a third fluidic motor device 30. This rotary table 28 performs the main operational function of the machine, in this case represented by the rotation of the tool performing the excavation or the piling or the consolidation. The crawler unit 12 allows the equipment to move between at least two working positions wherein the equipment performs its main work through the activation of at least one of said fluidic motors or fluidic actuators and in particular of the motor associated with the rotary table 28.

In the case of different applications, for example a crane, the mast 18 is replaced by a modular arm, generally latticed, that is equipped with motor members for the swinging movements and bearing on the top a transmission header used to lift tools and loads in general, by means of a hoisting line, which is also driven by the second fluidic motor device 26. In this construction equipment, the main function is that of lifting and lowering and this is also carried out using at least the above-mentioned fluidic motor 26.

As is clear to persons skilled in the art, in the present description and in the accompanying claims the term "fluidic motor device" or "fluidic actuator device" means any equipment adapted to convert, in a continuous or respectively in a discontinuous manner, at least one part of the kinetic energy provided by a fluid into mechanical energy. Therefore the above term also contemplates the case of a plurality of motors or actuators which cooperate to act as a single fluidic motor unit or a single fluidic actuator unit. In fact, generally, in many cases the rotary tables 28 have at least two fluidic motors 30 (the combination of which thus form the "third fluidic motor device"), the lifting members of the mast 18 generally consist of at least one pair of fluidic cylinders 20 (the combination of which thus forms the "first fluidic actuator device"), and the propulsion system of the crawler unit 12 generally comprises a pair of fluidic motors 14 (the combination of which thus forms the "first fluidic motor device"), which activate a respective pair of crawler tracks positioned on opposite sides of the equipment, etc.

The equipment 10 comprises an internal combustion engine 32 arranged to generate a mechanical power and emit exhaust gases, and a pumping system 34 arranged to use the above-mentioned mechanical power to pressurize a working fluid. These pumping systems can sometimes also comprise mechanical couplers (not illustrated) which divide the mechanical power transferred from the output shaft (not illustrated) of the internal combustion engine over several outputs (or power inlets), so as to connect a plurality of pumps that are necessary for carrying out the envisaged functions on the equipment.

Typically, the working fluid can be a liquid, such as oil, in particular hydraulic oil and, consequently, the actuator devices and motor devices 14, 20, 26, 30 can be of the hydraulic type.

The working fluid is advantageously contained in an internal tank (not illustrated) located inside the equipment 10.

In the illustrated embodiment, the internal combustion engine 32 presents the output shaft (not illustrated) coupled with the pumping system 34, so as to drive the working fluid originating from the internal tank and pressurize it. Thus the mechanical energy of the above-mentioned output shaft is converted, at least in part, into hydraulic energy of a pressurized fluid, in particular of oil, this transformation also being of the non-unitary efficiency type.

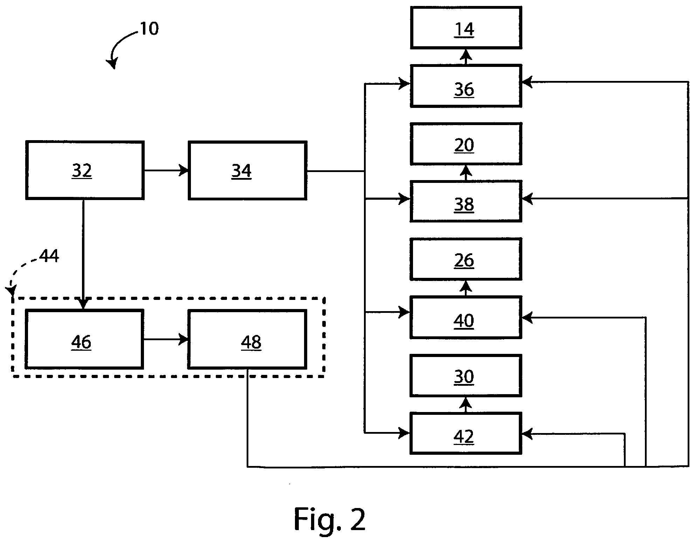

With reference in particular to figures 1 and 2, the equipment 10 comprises a plurality of fluidic control circuits, wherein each of said circuits is arranged to receive the working fluid pressurized by the pumping system 34 and to deliver it under pressure to the respective fluidic actuator devices or fluidic motor devices 14, 20, 26, 30. In particular, in the illustrated embodiment, between the pumping system 34 and respectively the first fluidic engine device 14, the first fluidic actuator device 20, the second fluidic motor device 26 and the third fluidic motor device 30 are respectively connected with a first, second, third and fourth control circuit 36, 38, 40, 42. The fluidic connection between the pumping system 34 and the control circuits 36, 38, 40, 42 takes place by means of a plurality of connections, in the case of the use of hydraulic energy, advantageously pipes (not numbered).

In further variant embodiments that are not illustrated, the fluidic motor devices and fluidic actuator devices can be of a different number and can also be associated with various different components and elements of the drilling machine, as can the respective fluidic control circuits. In this regard, for reasons of simplicity and conciseness, any secondary functions that require a power supply on the part of the fluidic motor devices and of the fluidic actuator devices have not been mentioned. The above-mentioned secondary functions are responsible for carrying out activities that are secondary to those already listed, among which are mentioned, by way of a non-limiting example, the air conditioning of the cab, control of driving systems, of the hydraulic oil cooling systems, of the service winches, of the pull-down systems, of the vice systems, etc.

Alternatively, in further less preferred and embodiments that are not illustrated, the construction equipment can also envisage a single fluidic actuator (device) or a single fluidic motor (device) connected with the pumping system through a single associated fluidic control circuit, to perform the main operation for which it is produced.

Additionally, the equipment 10 comprises an energy recovery apparatus 44 which comprises a thermodynamic system 46 arranged to convert the heat presented by the exhaust gases generated on the combustion produced by the internal combustion engine 32 into auxiliary mechanical power Wₜ.

Thanks to the energy recovery apparatus 44, the efficiency of the equipment 10 is significantly increased thus recovering a portion of the energy in any case dissipated by the internal combustion engine 32.

Preferably, the energy recovery apparatus 44 further comprises an auxiliary pumping system 48 arranged to use the auxiliary mechanical power Wₜ generated by the thermodynamic system 46 to pressurize an auxiliary working fluid, for example oil, and supply it to the control circuits 36, 38, 40, 42, providing the latter with an auxiliary fluidic or hydraulic power P_{hydr}. In particular, the auxiliary mechanical power Wₜ is supplied to the control circuit that must perform the main function (rotation of the driving head, winch for hoisting cranes).

The use of the auxiliary pumping system 48 presents the advantage that the latter is not mechanically coupled with the internal combustion engine 32 or with the pumping system 34. Thus, operation of the internal combustion engine 32 and of the pumping system 34 is not affected in the event of a malfunction of the thermodynamic system 46 and/or of the auxiliary pumping system 48. Therefore, any breakdown in the energy recovery apparatus 44 do not necessarily involve shutdown of the equipment 10, which can in any case continue to perform the necessary activities thanks to the energy supplied by the internal combustion engine 32 and to the pumping system 34.

A further advantage is provided in that the internal combustion engine 32 remains unchanged in its form and construction, ensuring an easy availability of parts in the event of breakdowns and also making an applicability of this system possible in equipment already placed on the market.

Preferably, the thermodynamic system 46 is structured to produce a thermodynamic cycle Rankine. More preferably, the operating fluid used in the above thermodynamic cycle is an organic substance having a high molecular weight, therefore the thermodynamic system 46 is arranged to perform an Organic Rankine Cycle (abbreviated by the acronym ORC).

The operating fluids that can be used are numerous. The following are mentioned by way of a non-limiting example: isopentane, R-22, R-134a, R245fa, R-11. Possibly, again by way of example, toluene, ethanol and water may also be used.

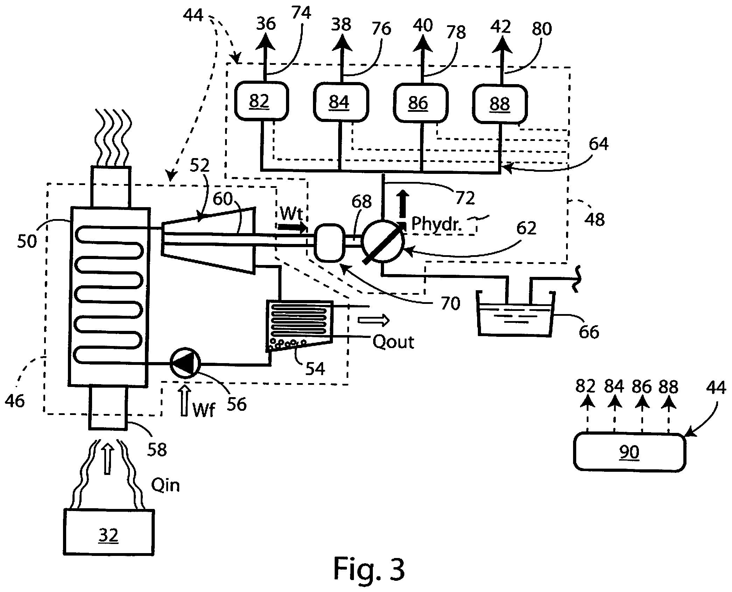

With reference in particular to the embodiment illustrated in figure 3, the thermodynamic system 46 comprises an evaporator 50, a turbine 52 provided with a rotation shaft 60, a capacitator 54 and a circulation pump 56 that are interconnected and cooperate together to produce the thermodynamic Rankine cycle. In output from the internal combustion engine 32, the exhaust gases are equipped with a certain amount of heat Qᵢₙ and are intended to yield to the thermodynamic system 46 at least a fraction of the above-mentioned amount of heat being channelled into the evaporator 50, for example by means of a suitable exhaust duct 58 connected with the internal combustion engine 32. Meanwhile, the circulation pump 56, powered by a mechanical power inlet Wp, drives an operating fluid in the liquid phase towards the evaporator 50 so as to produce a heat exchange between the working fluid and the exhaust gases. The working fluid is then heated, leading it to adopt the vapour phase. Subsequently the turbine 52, which is connected with the outlet of the evaporator 50, is crossed by the heated operating fluid, which activates in rotation the shaft 60, generating auxiliary mechanical power Wₜ. Thereafter, the capacitor 54, which is connected with the outlet of the turbine 52, receives the operating fluid and cools it by bringing it back to the liquid phase, yielding a quantity of heat Qₒᵤₜ towards the outside of thermodynamic system 44. At this point the working fluid is again driven towards the evaporator 50.

In the illustrated embodiment, the auxiliary pumping system 48 comprises at least one auxiliary pump 62 arranged to pressurize the auxiliary working fluid and a pipe 64 connected at output to the auxiliary pump 62 and directed toward the control circuits 36, 38, 40, 42 to deliver to the latter the pressurized working fluid.

The auxiliary pumping system 48 could further comprise a specific tank 66 containing the auxiliary working fluid. However more preferably, the tank 66 coincides with the internal tank (not shown) of the equipment 10 and the auxiliary working fluid coincides with the "primary" working fluid supplied by the pumping system 34; in the latter case, the only distinction between the working fluids is that they are respectively aspirated by the "primary" pumping system 34 or by the auxiliary pumping system 48 which draw from the same tank 66.

Clearly, the control circuits 36, 38, 40, 42 envisage respective ducts or return portions (not shown) produced to direct the auxiliary working fluid into the tank 66. The auxiliary working fluid can reach the tank 66 directly, possibly after having passed through a filter (not illustrated), or it may first pass through a cooling radiator (not illustrated) of the hydraulic oil. Advantageously, the return ducts are those already present on the equipment 10.

The auxiliary pump 62 is preferably a fluid-dynamic pump, such as for example a volumetric pump, and comprises an input shaft 68 that is kinematically coupled with the shaft 60 of the turbine 52. The pump 62 is advantageously of the variable displacement type so as to be able to adapt its operation to the speed of rotation of the turbine 52. The pump 62 may also be of a fixed displacement or gear type.

More preferably, the input shaft 68 and the shaft 60 are coupled by means of a reduction gear 70, for example of the type having a single gear ratio. This reduction gear is inserted to make the speed of rotation of the shaft 60 of the turbine 52 compatible with the input shaft 68 of the auxiliary pump 62. Preferably, the speed is reduced passing from the shaft 60 to the input shaft 68. It is also possible for the reduction gear 70 to be a coupler, i.e. a reduction gear that has an input (turbine shaft 60) and at least two outputs for at least as many pumping means or fluidic motor means 62.

Preferably, the piping 64 comprises an outlet portion 72 that is connected to the auxiliary pump 62 output and a plurality of supply portions 74, 76, 78, 80, each of which connecting the outlet portion 72 with the respective control circuit 36, 38, 40, 42. In the illustrated embodiment, the outlet portion 72 branches into the supply portions 74, 76, 78, 80, for example after it flows into a common manifold from which the above-mentioned supply portions 74, 76, 78, 80 branch.

Preferably, the pumping system 48 further comprises a valve arrangement arranged to selectively control the flow of the working fluid that is pressurized by the auxiliary pump 62, which passes through the piping 64 and which is directed towards one or more of the primary control circuits 36, 38, 40, 42.

In the illustrated embodiment, the valve arrangement includes a plurality of valves 82, 84, 86, 88, for example shut-off valves. The same valves can be produced as a distributor. The valves 82, 84, 86, 88 are advantageously located inside the pipe 64, for example, each pipe is located inside a respective supply portion 74, 76, 68, 80 and is arranged to selectively block/free it. In the illustrated embodiment the valves 82, 84, 86, 88 are solenoid valves. Clearly, as previously mentioned, the above-mentioned further secondary functions can be also considered in the pumping system 48 and a pressurized auxiliary working fluid originating from the pump 62 can only and selectively be supplied to some of them or to both functions (the secondary and primary functions).

Advantageously, the energy recovery apparatus 44 also comprises a control unit 90 configured to activate the valve arrangement so as to direct the working fluid towards at least one of the (primary and secondary) control circuits 36, 38, 40, 42 in which it is necessary to use the auxiliary fluidic power supplied by the pump 62. In the illustrated embodiment, the control unit 90 is programmed to activate at least the valves 82, 84, 86, 88.

In addition, the control unit 90 can be designed to control the valve arrangement, for example the valves 82, 84, 86, 88 in an automatic and/or manual manner.

In the case in which the control unit 90 is configured for an automatic operation, it can use predetermined algorithms that automatically establish which of the fluidic actuator devices or of the fluidic motor devices 14, 20, 26, 30 require auxiliary fluidic or hydraulic power P_{hydr} and then open one or more of the corresponding valves 82, 84, 86, 88 associated with the respective control circuits 36, 38, 40, 42.

In the case in which the control unit 90 is arranged for manual operation, or is not present, a user can select the fluidic actuator devices or the fluidic motor devices 14, 20, 26, 30 to which to supply the auxiliary fluidic or hydraulic power P_{hydr}. This selection can be directly performed by the user on the valve means or on the control systems, or in case of the presence of the control unit 90, on its interface (for example, a data entry device of the so-called "touch screen" type), consequently the control unit 90 will open the valves manually selected by the user in the valve assembly 82, 84, 86, 88 associated with the respective control circuits 36, 38, 40, 42.

Preferably, depending on the needs of the user, the operation of the control unit 90 can be switched between automatic and manual mode.

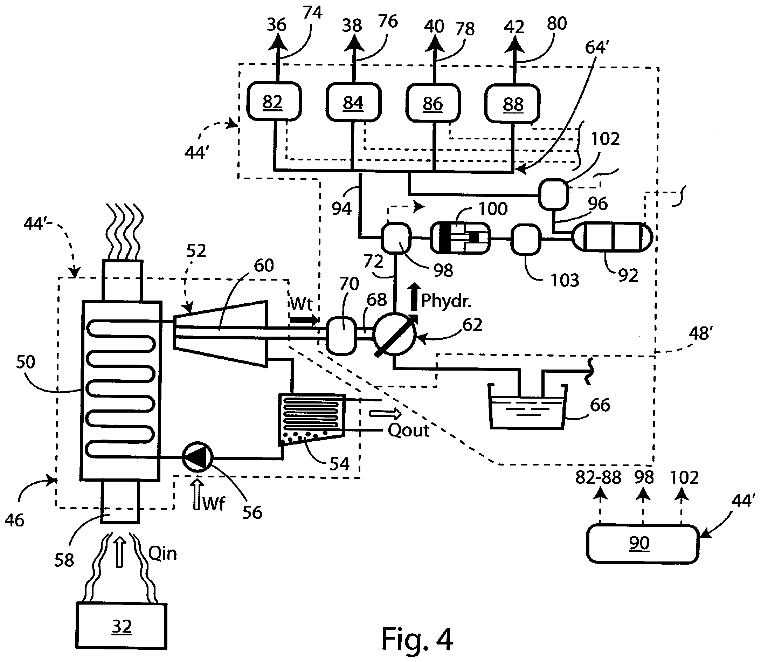

With reference to figure 4, 44' globally indicates a variant of the energy recovery apparatus shown in the previous figures.

Similar details and elements - or having an analogous function - to those associated with the previously illustrated heat recovery apparatus 44, are associated with the same alphanumeric references. For the sake of brevity, the description of these details and elements will not be repeated hereunder, but reference should be made to that which has been previously set out.

As concerns details and elements presenting substantial differences from a structural and/or functional point of view with respect to the previously illustrated heat recovery apparatus 44, these are associated with the same alphanumeric references to which an apostrophe is added.

As regards new details and new elements with respect to the energy recovery apparatus 44, the reference numbers associated thereto correspond to the continuation of the numbering used for this energy recovery apparatus 44.

In this first variant, the auxiliary pumping system 48' comprises an accumulator 92 arranged to store an amount of pressurized auxiliary working fluid originating from at least one auxiliary pump 62 and to supply the stored pressurized auxiliary fluid to the control circuits 36, 38, 40, 42 through pipe 64'. The hydraulic accumulator 92 is situated inside the pipe 64'. As will be described below, the accumulator 92 is preferably dimensioned to accumulate the auxiliary fluid having a pressure greater than that of the working fluid normally supplied by the pumping system 34 directly associated with the internal combustion engine 32.

Preferably, the pipe 64' further comprises a supply branch 94 and an accumulation branch 96 wherein the accumulator 92 is arranged. The supply branch 94 and the accumulation branch 96 branch off from the outlet portion 72 and terminate in the supply portions 74, 76, 78, 80.

The auxiliary pumping system 48' comprises a further valve arrangement arranged to distribute the working fluid originating from the outlet portion 72 between the supply branch 94 and the accumulation branch 96. For example, the further valve arrangement is a flow diversion valve 98 configured to channel the flow of pressurized working fluid originating from the outlet portion 72 towards the supply branch 94 or towards the accumulation branch 96. The flow diversion valve 98 may possibly also envisage one or more "intermediate" conditions wherein it produces an output partition of the pressurized working fluid originating from the auxiliary pump 62 between the supply branch 94 and the accumulation branch 96.

Preferably, the auxiliary pumping system 48' comprises a pressure multiplier 100 located downstream of the auxiliary pump 62 and upstream of the accumulator 92. Advantageously, the pressure multiplier 100 is arranged to increase the pressure of the auxiliary working fluid originating from the auxiliary pump 62 up to an "overpressure" value that is greater that the value of the pressure of the working fluid normally supplied by the pumping system 34 associated with the internal combustion engine 32. The pressure multiplier 100 thus provides the accumulator 92 with the auxiliary working fluid presenting the above-mentioned overpressure. Preferably, the accumulator 92 and the pressure multiplier 100 are hydraulically arranged in series. In this first variant the pressure multiplier 100 is located inside the accumulation branch 96, for example between the flow diversion valve 98 and the accumulator 92.

A valve arrangement 103 that acts as a non-return valve and prevents the pressurized fluid from returning to the pressure multiplier 100, is advantageously present between the pressure multiplier 100 and the pressure accumulator 92. In a preferred manner, a further valve arrangement (not shown) that acts as a safety or maximum pressure valve, can be furthermore present between the pressure accumulator 92 and the pressure multiplier 100, so as to set or adjust the maximum input pressure value to the accumulator 92.

In the first variant illustrated in figure 4, the auxiliary pumping system 48' further comprises another valve arrangement, normally in a closed condition, which is arranged to selectively put into communication the accumulator 92 with the supply portions 74, 76 , 78, 80.

Advantageously, the accumulator 92 presents at least one pressure sensor (not illustrated) capable of transmitting to the control unit 90 signals representative of the pressure adopted by the auxiliary fluid in the accumulator 92. This pressure sensor allows the control unit 90 to be alerted when the accumulated energy from the auxiliary working fluid contained in the accumulator 92 is usable in an efficient manner, that is to say when the auxiliary working fluid reaches a predetermined threshold usage value.

The other valve arrangement is preferably situated downstream of the accumulator 92, for example in the accumulation branch 96. More preferably the above-mentioned other valve arrangement is situated between the accumulator 92 and the supply portions 74, 76, 78, 80, for example upstream of the valves 82, 84, 86, 88. In this first embodiment, the other valve arrangement comprises another valve 102, for example a shut-off valve configured to selectively free and block the accumulation portion 96. The other valve 102 is advantageously a solenoid valve.

The control unit 90 is preferably configured to control, in a manual and/or automatic manner, the further valve arrangement (that is to say, in the variant of the illustrated embodiment, the flow diversion valve 98) and/or the other valve arrangement (that is to say, in the illustrated variant embodiment, the shut-off valve 102). When the energy accumulated by the accumulator 92 is ready to be used (for example when the pressure sensor associated with the accumulator 92 signals that the predetermined threshold usage value has been reached), the control unit 90 can impose the opening of the shut-off valve 102 and of at least one of the valves 82, 84, 86, 88 depending on which function of the equipment 10 has been activated.

During operation of the equipment 10, the energy recovery apparatus 44' can directly deliver the auxiliary working fluid to the control circuits 36, 38, 40, 42 through the supply portions 74, 76, 78, 80. In this phase, the flow diversion valve 98 is in a condition wherein it allows the pressurized auxiliary working fluid to pass through the supply branch 94.

At times in which the pressurized working fluid is to be stored in the accumulator 92, the flow diversion valve 98 can be activated so as to be moved to a condition in which it allows the flow of auxiliary working fluid to pass through the accumulation branch 96. At the same time, the other valve 102 remains closed to prevent the auxiliary working fluid from continuing its journey through the pipe 64'.

When an elevated pressure is required in the control circuits 36, 38, 40, 42, the other valve 102 is opened. The auxiliary working fluid stored is thus discharged from the accumulator 92 with an overpressure, and is directed to the supply portions 74, 76, 78, 80. Meanwhile one or more of the valves 82, 84, 86, 88 are also opened to duly send the auxiliary working fluid from one or more of the supply portions 74, 76, 78, 80 to one or more of the control circuits 36, 38, 40, 42.

The variant illustrated in figure 4 is particularly advantageous in the case of "peaks" in the pressure demand in the control circuits 36, 38, 40, 42 (whether these relate to a primary or secondary function), when the associated fluidic actuator devices or fluidic motor devices 14, 20, 26, 30 require activities that are particularly onerous from the point of view of the required loads, to be performed.

For example, let us consider the case in which in the equipment 10, considered as a drilling machine, the excavation tool or drilling rod 22 encounters an obstacle during drilling. In this condition, the drilling rod 22 is at risk of becoming blocked and not successfully completing the drilling operation. Instead, thanks to the overpressure stored by the accumulator 92, this drawback can be overcome by supplying an additional flow rate at a greater pressure to the control circuit 42 alone to power the fluidic motor device 30, when effectively required. The additional energy is thus advantageously transferred to the primary operating function, in this case rotation. In the specific above-mentioned case, opening the other valve 102 and the valve 88, provides the rotary table 28 with a greater pressure thanks to the journey of the auxiliary working fluid in overpressure, and the drilling rod 22 is thus subject to a greater torque to overcome the resistance opposed by the obstacle.

In addition, the ability to store the fluid at higher pressure allows the volume of the fluid to be stored inside the accumulator 92 to be reduced and it is thus possible, given the same overall dimensions, to store a greater fluidic power.

According to an alternative implementation of the variant illustrated in figure 4, the supply branch 94 in the pipe 64' can be optionally omitted and the outlet portion 72 can terminate directly in the accumulation branch 96, possibly even without the flow diversion valve 98. Thus, only the auxiliary working fluid previously stored in the hydraulic accumulator 92 can be sent to the supply portions 74, 76, 78, 80. In this alternative implementation, the pressure multiplier 100 can also be optionally omitted and the auxiliary pump 62 can be dimensioned so that it itself is able to supply directly to the accumulator 92 the auxiliary working fluid already having sufficient overpressure to supply a surplus of pressure into the control circuits 36, 38, 40, 42 when required.

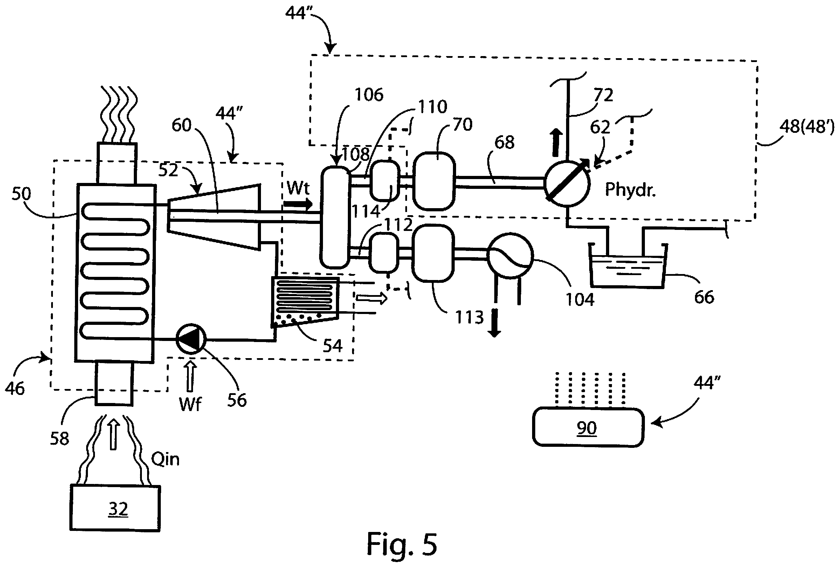

With reference to figure 5, 44" globally indicates a second variant of the energy recovery apparatus shown in the preceding figures.

Similar details and elements - or details having an analogous function - as those associated with the previously illustrated energy recovery apparatuses 44 and 44', are associated with the same alphanumeric references. For the sake of brevity, the description of these details and elements will not be repeated hereunder, but reference should be made to that which has been previously set out.

As concerns details and elements presenting substantial differences from a structural and/or functional point of view with respect to the previously illustrated heat recovery apparatus 44, these are associated with the same alphanumeric references which terminate with two apostrophes.

As regards details and elements that are new with respect to the energy recovery apparatus 44', the reference numbers associated thereto correspond to the continuation of the numbering used for this energy recovery apparatus 44'.

In this second variant, the energy recovery apparatus 44" further comprises an electric generator 104 arranged to use the auxiliary mechanical power Wₜ originating from the thermodynamic system 46 so as to generate electrical power. The electric generator 104 is intended to provide electrical power to batteries (not shown) and/or further electric power supply devices present onboard the equipment 10.

Additionally, the energy recovery apparatus 44" comprises a transmission 106 arranged to selectively transfer the auxiliary mechanical power Wₜ, supplied by the thermodynamic system 46 to the pumping system 48 or 48' and/or to the electric generator 104. Preferably, the transmission 106 comprises a gear 108 that is operatively connected in input with the shaft 60 of the turbine 52 and connected in output with a first and a second driven shaft 110, 112. The first and second driven shafts 110 and 112 are kinematically connected respectively to the auxiliary pumping system 48 or 48'(through the auxiliary pump 62 for example) and the electric generator 104. For example, a further reduction gear 113 can be inserted between the electric generator 104 and the transmission 106.

In this second variant, the energy recovery apparatus 44" comprises a coupling mechanism arranged to selectively couple and decouple the transmission 106 and the auxiliary pumping system 48 or 48', and/or the transmission 106 and the electric generator 104.

For example, in this second variant, the energy recovery apparatus 44" comprises a first coupling 114 arranged to selectively couple/decouple the transmission 106 and the auxiliary pumping system 48 or 48'. Preferably, the first coupling 114 is kinematically connected between the auxiliary pump 62 and the first driven shaft 110. For example, the first coupling 114 is situated between the transmission 106 and the reduction gear 70.

In an analogous manner, the energy recovery apparatus 44" comprises a second coupling 116 arranged to selectively couple/decouple the transmission 106 and the electric generator 104. Preferably, the second coupling 116 is kinematically connected between the electric generator 104 and the second driven shaft 112. Advantageously, the second coupling 116 is located between the transmission 106 and the further reduction gear 113.

In this second variant, the control unit 90 is programmed to control (by manual or automatic command) the coupling device, for example the couplings 114,116.

In less preferred variants, the coupling device may comprise only one of the couplings 114, 116. For example, the first coupling 114 could be omitted, and therefore the auxiliary pumping system 48 or 48' would always be operatively coupled with the transmission 106 (and therefore with the shaft 60 of the turbine 52). It would be consequently possible to connect the electric generator 104 with the transmission 106 (and therefore with the shaft 60) by means of the second coupling 116 only in predetermined or desired operational conditions.

With regard to the portion of the pumping system located downstream of the outlet portion 72, this can be configured for example as illustrated in figure 3 (pumping system 48) or in the first variant shown in figure 4 (pumping system 48').

According to the variant illustrated in figure 5, during operation of the equipment 10, depending on the energy requirements in hydraulic or electrical terms, the control unit 90 provides to insert or remove the couplings 114, 116 to supply the auxiliary mechanical power auxiliary Wₜ to the auxiliary pump 62 or to the electric generator 104, or possibly to both.

In fact, some of the equipment utilities can advantageously be supplied with an electrical power source, by effect of the best performance of this system with respect to hydraulic performance and to a simplicity of commands and of controls. In this regard, certain motor means for the radiators, for the auxiliary systems necessary for the auxiliary working means (welding machines, compressors, ...) are often of the electric type.

In a further variant, the pumping system 48 or 48' can be absent in the construction equipment, only the electric generator 104 remaining connected to the shaft 60 of the thermodynamic system 46, possibly through the further reduction gear 113.

Another less preferred variant (not shown) envisages the direct coupling, by means of suitable belt transmission, of the shaft 60 of the turbine 52 to the shaft of the internal combustion engine 32 to return the recovered energy thereto. In this case the elastic transmission system allows the thermodynamic system 46 to be isolated from the internal combustion engine 32 and therefore no vibration problem as in the case of patent WO 2011/085868 A1 which instead provides for a direct transmission by means of geared wheels. In addition, the internal combustion engines 32, of the industrial series, are supplied with some additional power inlets that are usable for taking power and these can be advantageously used to yield power to the internal combustion engine itself. It is therefore possible, through the inclusion of appropriate transmissions connected to these power inlets to connect the thermodynamic system 46 with belts, in particular the output shaft 60 of the turbine 52, to the internal combustion engine 32. In certain specific versions, the internal combustion engine 32 is already set up with a pulley to supply, for example, a small compressor used in the air-conditioning of the cabin. This device can be used inversely, to connect the shaft 60 to the internal combustion engine 32, with the said belts.

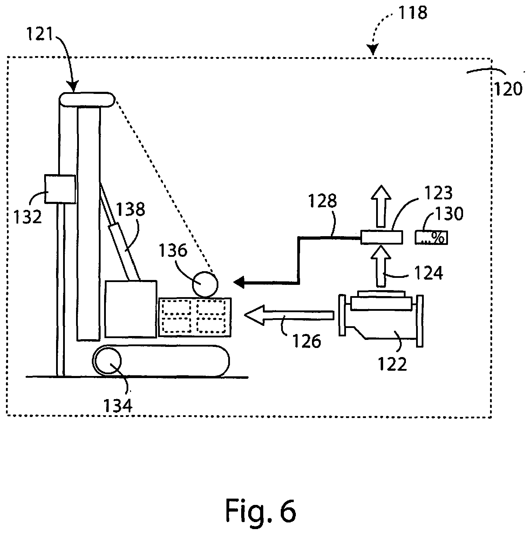

With reference to figure 6, one embodiment of a user interface 118 applicable to both the illustrated embodiments and to the related variants, will now be described below.

The user interface 118 preferably comprises a displaying device or display 120 configured to represent data indicative of the auxiliary mechanical power Wₜ supplied by the thermodynamic system 46, for example towards the auxiliary pumping system 48. More preferably, the displaying device 120 is also configured to represent data indicative of the mechanical power supplied by the internal combustion engine 32, for example to the pumping system 34.

For example, the displaying device 120 is arranged to schematically display certain components of the equipment 10 and the corresponding power flows distributed between them.

In the illustrated embodiment, the display 120 is able to make visible a schematic representation 121 of the equipment and of which a schematic reproduction 122 of the internal combustion engine and a schematic representation 123 of the energy recovery apparatus are separately represented.

For example, the display 120 is configured to display one or more of the following graphical indicators comprised in the assembly consisting of: a first graphical indicator 124 representative of the heat supplied by the internal combustion engine 32 to the energy recovery apparatus 44, a second graphical indicator 126 representative of the mechanical power supplied by the internal combustion engine 32 to the pumping system 34, a third graphical indicator 128 representative of the auxiliary mechanical power Wₜ recovered by the heat recovery apparatus 44 and supplied to the auxiliary pumping system 48, and a fourth graphical indicator 130 representative of the recovered power and energy.

Preferably, the schematic representation 121 of the equipment exhibits a plurality of areas 132, 134, 136, 138 indicative of the fluidic actuator devices or fluidic motor devices, the control circuits 36, 38, 40, 42 of which receive the auxiliary working fluid, exploiting the auxiliary mechanical power Wₜ. In the example shown in figure 6, the display 120 shows the graphic area 132 associated with the third fluidic motor device 30 when the control circuit 42 controls the rotation of the drilling rod 22 through the rotary table 28.

For example, in order to control the overall operation, the equipment 10 can be equipped with a plurality of sensor means (not shown) arranged to provide the control unit 90 with signals indicative of the respective activation or deactivation of various components of the equipment 10. In addition, the control unit 90 is advantageously configured to show and/or highlight, in a suitable manner, on the display 120 the associated representations and graphical indicators 122, 123 and 124, 126, 128, 130 on the basis of the aforementioned signals.

Preferably, on the basis of the open/closed status of the valves 82, 84, 86 and 88, the control unit 90 is configured to show and/or highlight, in a suitable manner, the graphic areas 132, 134, 136 and 138 associated with the respective actuator devices or fluidic motors 14, 20, 26 and 30 the control circuits 36, 38, 40 and 42 of which are deactivated/activated. Again with reference to the example shown in figure 6, the control unit 90 has brought the valve 88 associated with the control circuit 42 into an open position, thus activating the rotary table 28 which activates the drilling rod 22 through the third fluidic motor device 30. The control unit 90 therefore displays and/or shows the graphic area 132 on the display 120, indicating that the control circuit 42 of the drilling rod 22 benefits from the auxiliary mechanical power Wₜ supplied by the energy recovery apparatus 44.

In the illustrated embodiment, the displaying device 120 is of the so-called touch-screen type that allows the heat recovery apparatus 44 to be controlled and/or the selection of which actuator or fluidic motor devices 14, 20, 26, 30 the pressurized auxiliary working fluid is to be sent to. For example, by touching the display 120 at one or more of the graphic areas 132, 134, 136, 138, a user can make a selection relating to which fluidic actuator device or devices and/or fluidic motor device or devices 14, 20, 26, 30 is or are to be activated.

The display 120 then alerts the control unit 90 of the selection made by the user. The control unit 90 subsequently activates the respective valve or valves 82, 84, 86, 88 that control the inflow of auxiliary working fluid into the control circuits 36, 38, 40, 42 of the fluidic actuator devices or fluidic motors 14, 20, 26, 30 on the basis of the selection made by the user.

A further variant, not shown in the figures, envisages the installation of one or more power generation units (or "power packs") externally to the equipment 10, for the supply of an additional electric or hydraulic power, necessary for the performance of certain excavation and consolidation operations or for carrying out piling work for example.

In this case, the external power generation unit generally consists of a hydraulic unit or of a generator unit that in each case contain an internal combustion engine 32.

In a manner analogous to that previously indicated for the internal combustion engine 32, the power generation unit or power pack can also incorporate an associated energy recovery apparatus configured as described above with reference to the equipment 10.

As already indicated, the system of the present invention allows equipment with overall greater performance and which therefore allows fuel saving and a decrease in polluting emissions to be obtained.

Application of the present system also allows more useful power to be obtained given the same internal combustion engine installed.

Furthermore, by taking a part of heat produced by the internal combustion engine to produce mechanical energy, the temperature of the equipment 10 is decreased around the engine area, thus allowing an easier and simpler dimensioning of the internal cooling systems.

Consequently, the temperature of the environment surrounding the equipment 10 is also not further heated by the operating cycle since a part of the heat is reused instead of being exchanged with the outside.

The thermodynamic system 46 is advantageously allocated around the outlet of the internal combustion engine 32 exhaust gases and suitably insulated to increase the efficiencies of the system itself.

Naturally, without prejudice to the principle of the invention, the embodiments and the embodiment details can be varied widely with respect to that which is described and illustrated purely by way of non-limiting example, without thereby departing from the scope of the invention as defined in the accompanying claims.

## Claims

1. Construction equipment (10) comprising
an internal combustion engine (32) arranged to generate mechanical power and discharge exhaust gases;
a pumping system (34) arranged to use said mechanical power to operate with a working fluid or energetic means;
at least one fluidic control circuit (36, 38, 40, 42) arranged to receive said working fluid and supply it to at least one fluidic actuator device and/or at least one fluidic motor device (14, 20, 26, 30);
an energy recovery apparatus (44; 44'; 44"), which comprises a thermodynamic system (46) arranged to convert at least a fraction of the heat (Qᵢₙ) introduced by said exhaust gases into auxiliary mechanical power (Wₜ)
said equipment being **characterized in that** said energy recovery apparatus (44; 44'; 44") comprises an auxiliary pumping system (48; 48') arranged to use said auxiliary mechanical power (Wt) to pressurize an auxiliary working fluid and supply it to said at least one fluidic control circuit (36, 38, 40, 42).

2. Equipment according to claim 1, wherein said thermodynamic system (46) is structured to produce a Rankine thermodynamic cycle.

3. Equipment according to claim 2, wherein said thermodynamic cycle is an organic Rankine cycle.

4. Equipment according to any one of claims 1 to 3, wherein said auxiliary pumping system (48; 48') comprises at least one auxiliary pump (62), arranged to pressurize the auxiliary working fluid, and a pipe (64; 64'), which is connected in output to said auxiliary pump (62) and is directed towards said at least one fluidic control circuit (36, 38, 40, 42) to supply said pressurized auxiliary working fluid.

5. Equipment according to claim 4, wherein said auxiliary pumping system (48; 48') comprises valve means (82, 84, 86, 88) for controlling the flow of auxiliary working fluid pressurized by said auxiliary pump (62), passing through said pipe (64, 64'), and directed towards said at least one control circuit (36, 38, 40, 42).

6. Equipment according to claim 5, wherein said energy recovery apparatus (44; 44'; 44") comprises a control unit (90), which is configured to operate said valve means (82, 84, 86, 88) in an automatic and/or manually controlled manner.

7. Equipment according to any one of claims 4 to 6, wherein said auxiliary pumping system (48') comprises an accumulator (92) that is arranged to store a quantity of said pressurized auxiliary working fluid originating from said auxiliary pump (62), and to selectively supply said stored pressurized auxiliary fluid to the control circuits (36, 38, 40, 42) through the pipe (64').

8. Equipment according to claim 7, wherein said auxiliary pumping system (48') comprises a pressure multiplier (100) situated within said pipe (64'), downstream of said auxiliary pump (62) and upstream of said accumulator (92).

9. Equipment according to any one of claims 1 to 8, wherein said energy recovery apparatus (44") further comprises an electric generator (104), arranged to use said auxiliary mechanical power (Wₜ) originating from said thermodynamic system (46) so as to generate electric power.

10. Equipment according to claim 9, wherein said energy recovery apparatus (44") comprises a transmission (106), arranged to transfer said auxiliary mechanical power (Wₜ) to said auxiliary pumping system (48, 48') and/or to said electric generator (104).

11. Equipment according to claim 10, wherein said energy recovery apparatus (44") further comprises coupling means (114, 116) arranged to selectively couple and decouple said auxiliary pumping system (48, 48') and said transmission (106) and/or said electric generator (104) and said transmission (106).

12. Equipment according to any of the preceding claims, comprising a displaying device (120), arranged to display information indicative of the auxiliary mechanical power (Wₜ) supplied by said thermodynamic system (46) and/or of the energy recovered therefrom.

13. Equipment according to claim 12, wherein said auxiliary pumping system (48, 48') is arranged to operate in manual control mode; said displaying device (120), preferably of the touch-screen type, being able to control said valve means (82, 84, 86, 88) so as to transmit the hydraulic power or the overpressure generated by said energy recovery system (44; 44'; 44") to one or more of said fluidic actuator means or fluidic engine means (14, 20, 26, 30) on the basis of a selection executed by a user through said displaying device (120).

14. Equipment (10) according to any one of the preceding claims, wherein said energy recovery apparatus (44; 44'; 44") is arranged to transfer said auxiliary mechanical power (Wₜ) to said internal combustion engine (32) through a belt drive system, which connects said energy recovery apparatus (44; 44'; 44") and at least one power inlet on said internal combustion engine (32).

15. Equipment (10) according to any one of claims 7 to 14, wherein the equipment comprises a valve arrangement (102), situated downstream of the accumulator (92) and arranged to selectively supply said pressurized auxiliary fluid, stored in said accumulator (92), to said at least one fluidic control circuit (36, 38, 40, 42).

16. Equipment (10) according to claim 15, wherein said valve arrangement (102) is arranged to selectively supply said pressurized auxiliary working fluid to said valve means (82, 84, 86, 88).

17. Equipment (10) according to any one of the claims 1 to 16 further comprising a rotary table (28) associated with a corresponding fluidic motor device (30); said auxiliary pumping system (48; 48') being arranged to direct at least part of said pressurized auxiliary working fluid to said fluidic motor device (30) associated with said rotary table (28), so as to increase the rotation speed and/or the torque transmitted to an excavator tool (22) associated with said rotary table (28).

18. Equipment (10) according to claim 4 wherein said thermodynamic system (46) comprises a turbine (52) provided with a rotation shaft (60) and said at least one auxiliary pump (62) comprises an input shaft (68) coupled with said rotation shaft (60) by means of a reduction gear (70).

## Patentansprüche

1. Baumaschine (10), umfassend:
einen Verbrennungsmotor (32), der ausgebildet ist, um mechanische Energie zu erzeugen und Abgase auszustoßen;
ein Pumpensystem (34), das ausgebildet ist, um die mechanische Energie zum Betrieb mit einem Arbeitsfluid oder einem energetischen Mittel zu verwenden;
mindestens einen Fluidsteuerkreis (36, 38, 40, 42), der ausgebildet ist, um das Arbeitsfluid aufzunehmen und es mindestens einer Fluidstellantriebsvorrichtung und/oder mindestens einer Fluidmotorvorrichtung (14, 20, 26, 30) zuzuführen;
eine Energierückgewinnungsvorrichtung (44; 44'; 44"), die ein thermodynamisches System (46) umfasst, das ausgebildet ist, um mindestens einen Bruchteil der von den Abgasen eingeführten Wärme (Qᵢₙ) in mechanische Hilfsenergie (Wt) umzuwandeln, wobei die Baumaschine **dadurch gekennzeichnet ist, dass** die Energierückgewinnungsvorrichtung (44; 44'; 44") ein Hilfspumpensystem (48; 48') umfasst, das so ausgebildet ist, dass es die mechanische Hilfsenergie (Wt) verwendet, um ein Hilfsarbeitsfluid unter Druck zu setzen und es dem mindestens einen Fluidsteuerkreis (36, 38, 40, 42) zuzuführen.

2. Baumaschine nach Anspruch 1, wobei das thermodynamische System (46) gegliedert ist, um einen thermodynamischen Rankine-Zyklus zu ergeben.

3. Baumaschine nach Anspruch 2, wobei der thermodynamische Zyklus ein organischer Rankine-Zyklus ist.

4. Baumaschine nach einem der Ansprüche 1 bis 3, wobei das Hilfspumpensystem (48; 48') mindestens eine Hilfspumpe (62), die ausgebildet ist, um das Hilfsarbeitsfluid unter Druck zu setzen, und ein Rohr (64; 64') umfasst, das ausgangs mit der Hilfspumpe (62) verbunden ist und in Richtung auf den mindestens einen Fluidsteuerkreis (36, 38, 40, 42) gerichtet ist, um das unter Druck stehende Hilfsarbeitsfluid zuzuführen.

5. Baumaschine nach Anspruch 4, wobei das Hilfspumpsystem (48; 48') eine Ventileinrichtung (82, 84, 86, 88) zum Steuern des Flusses des das Rohr (64, 64') durchlaufenden Hilfsarbeitsfluids, das durch die Hilfspumpe (62) unter Druck gesetzt wird und in Richtung auf den mindestens einen Steuerkreis (36, 38, 40, 42) gerichtet ist, umfasst.

6. Baumaschine nach Anspruch 5, wobei die Energierückgewinnungsvorrichtung (44; 44'; 44") eine Steuereinheit (90) umfasst, die ausgebildet ist, um die Ventileinrichtung (82, 84, 86, 88) in einer automatischen und/oder manuell gesteuerten Art und Weise zu betätigen.

7. Baumaschine nach einem der Ansprüche 4 bis 6, wobei das Hilfspumpensystem (48') einen Speicher (92) umfasst, der ausgebildet ist, um eine Menge des unter Druck stehenden Hilfsarbeitsfluids, das von der Hilfspumpe (62) stammt, zu speichern und wahlweise das gespeicherte, unter Druck stehende Hilfsfluid durch das Rohr (64') den Steuerkreisen (36, 38, 40, 42) zuzuführen.

8. Baumaschine nach Anspruch 7, wobei das Hilfspumpensystem (48') einen Druckvervielfacher (100) umfasst, der sich in dem Rohr (64') stromabwärts von der Hilfspumpe (62) und stromaufwärts von dem Speicher (92) befindet.

9. Baumaschine nach einem der Ansprüche 1 bis 8, wobei die Energierückgewinnungsvorrichtung (44") ferner einen elektrischen Generator (104) umfasst, der so ausgebildet ist, dass er die von dem thermodynamischen System (46) stammende mechanische Hilfsenergie (Wt) verwendet, um elektrische Energie zu erzeugen.

10. Baumaschine nach Anspruch 9, wobei die Energierückgewinnungsvorrichtung (44") ein Getriebe (106) umfasst, das ausgebildet ist, um die mechanische Hilfsenergie (Wt) auf das Hilfspumpensystem (48, 48') und/oder den elektrischen Generator (104) zu übertragen.

11. Baumaschine nach Anspruch 10, wobei die Energierückgewinnungsvorrichtung (44") ferner eine Kopplungseinrichtung (114, 116) umfasst, die ausgebildet ist, um das Hilfspumpensystem (48, 48') und das Getriebe (106) und/oder den elektrischen Generator (104) und das Getriebe (106) wahlweise zu koppeln und entkoppeln.

12. Baumaschine nach einem der vorhergehenden Ansprüche, umfassend eine Anzeigevorrichtung (120), die ausgebildet ist, um Information anzuzeigen, welche die von dem thermodynamischen System (46) zugeführte mechanische Hilfsenergie (Wₜ) und/oder die daraus zurückgewonnene Energie angibt.

13. Baumaschine nach Anspruch 12, wobei das Hilfspumpensystem (48, 48') ausgebildet ist, um in einem manuellen Steuermodus betrieben zu werden; die Anzeigevorrichtung (120), vorzugsweise vom Berührungsbildschirmtyp, in der Lage ist, die Ventileinrichtung (82, 84, 86, 88) so zu steuern, dass sie die hydraulische Energie oder den Überdruck, der durch die Energierückgewinnungsvorrichtung (44; 44'; 44") erzeugt wird, auf der Grundlage einer Auswahl, die von einem Benutzer über die Anzeigevorrichtung (120) getroffen wird, an eine oder mehrere der Fluidstellantriebsvorrichtungen oder Fluidmotorvorrichtungen (14, 20, 26, 30) zu übertragen.

14. Baumaschine (10) nach einem der vorhergehenden Ansprüche, wobei die Energierückgewinnungsvorrichtung (44; 44'; 44") ausgebildet ist, um die mechanische Hilfsenergie (Wt) über ein Riemenantriebssystem, das die Energierückgewinnungsvorrichtung (44; 44'; 44") und mindestens einen Energieeingang an dem Verbrennungsmotor (32) verbindet, an den Verbrennungsmotor (32) zu übertragen.

15. Baumaschine (10) nach einem der Ansprüche 7 bis 14, wobei die Baumaschine eine Ventilanordnung (102) umfasst, die sich stromabwärts von dem Speicher (92) befindet und ausgebildet ist, um das unter Druck stehende Hilfsfluid, das in dem Speicher (92) gespeichert ist, wahlweise mindestens einem Fluidsteuerkreis (36, 38, 40, 42) zuzuführen.

16. Baumaschine (10) nach Anspruch 15, wobei die Ventilanordnung (102) ausgebildet ist, um das unter Druck stehende Hilfsfluid wahlweise der Ventileinrichtung (82, 84, 86, 88) zuzuführen.

17. Baumaschine (10) nach einem der Ansprüche 1 bis 16, ferner umfassend einen Drehtisch (28), der mit einer entsprechenden Fluidmotorvorrichtung (30) verbunden ist; wobei das Hilfspumpensystem (48; 48') ausgebildet ist, um wenigstens einen Teil des unter Druck stehenden Hilfsarbeitsfluids an die mit dem Drehtisch (28) verbundene Fluidmotorvorrichtung (30) zu leiten, um so die Drehzahl und / oder das Drehmoment, das an ein mit dem Drehtisch (28) verbundenes Baggerwerkzeug (22) übertragen wird, zu erhöhen.

18. Baumaschine (10) nach Anspruch 4, wobei das thermodynamische System (46) eine mit einer Drehwelle (60) versehene Turbine (52) umfasst und die mindestens eine Hilfspumpe (62) eine Eingangswelle (68) umfasst, die mittels eines Untersetzungsgetriebes (70) mit der Drehwelle (60) verbunden ist.

## Revendications

1. Equipement de construction (10) comprenant :
un moteur à combustion interne (32) agencé pour produire une énergie mécanique et rejeter des gaz d'échappement ;
un système de pompage (34) agencé pour utiliser ladite énergie mécanique pour fonctionner avec un fluide de travail ou un moyen énergétique ;
au moins un circuit de commande fluidique (36, 38, 40, 42) agencé pour recevoir ledit fluide de travail et pour le fournir à au moins un dispositif d'actionneur fluidique et/ou au moins un dispositif de moteur fluidique (14, 20, 26, 30) ;
un dispositif de récupération d'énergie (44 ; 44' ; 44"), qui comprend un système thermodynamique (46) agencé pour convertir au moins une fraction de la chaleur (Qᵢₙ) introduite par lesdits gaz d'échappement en une puissance mécanique auxiliaire (Wₜ),
ledit équipement étant **caractérisé en ce que** ledit dispositif de récupération d'énergie (44 ; 44' ; 44") comprend un système de pompage auxiliaire (48 ; 48') agencé pour utiliser ladite puissance mécanique auxiliaire (Wₜ) pour mettre sous pression un fluide de travail auxiliaire et le fournir audit au moins un circuit de commande fluidique (36, 38, 40, 42).

2. Equipement selon la revendication 1, dans lequel ledit système thermodynamique (46) est structuré pour produire un cycle thermodynamique de Rankine.

3. Equipement selon la revendication 2, dans lequel ledit cycle thermodynamique est un cycle de Rankine à fluide organique.

4. Equipement selon l'une quelconque des revendications 1 à 3, dans lequel ledit système de pompage auxiliaire (48 ; 48') comprend au moins une pompe auxiliaire (62), agencée pour mettre sous pression le fluide de travail auxiliaire, et un tuyau (64 ; 64') qui est raccordé en sortie à ladite pompe auxiliaire (62) et est dirigé vers ledit au moins un circuit de commande fluidique (36, 38, 40, 42) pour fournir ledit fluide de travail auxiliaire sous pression.

5. Equipement selon la revendication 4, dans lequel ledit système de pompage auxiliaire (48 ; 48') comprend un moyen formant robinet (82, 84, 86, 88) pour commander le débit de fluide de travail auxiliaire mis sous pression par ladite pompe auxiliaire (62), qui passe dans ledit tuyau (64 ; 64') et est dirigé vers ledit au moins un circuit de commande (36, 38, 40, 42).

6. Equipement selon la revendication 5, dans lequel ledit dispositif de récupération d'énergie (44 ; 44' ; 44") comprend une unité de commande (90), qui est configurée pour actionner ledit moyen formant robinet (82, 84, 86, 88) de manière automatique et/ou à commande manuelle.

7. Equipement selon l'une quelconque des revendications 4 à 6, dans lequel ledit système de pompage auxiliaire (48') comprend un accumulateur (92) qui est agencé pour stocker une quantité dudit fluide de travail auxiliaire sous pression provenant de ladite pompe auxiliaire (62), et pour fournir de façon sélective ledit fluide auxiliaire sous pression stocké aux circuits de commande (36, 38, 40, 42) via le tuyau (64').

8. Equipement selon la revendication 7, dans lequel ledit système de pompage auxiliaire (48') comprend un multiplicateur de pression (100) situé dans ledit tuyau (64'), en aval de ladite pompe auxiliaire (62) et en amont dudit accumulateur (92).

9. Equipement selon l'une quelconque des revendications 1 à 8, dans lequel ledit dispositif de récupération d'énergie (44") comprend en outre un générateur électrique (104), agencé pour utiliser ladite puissance mécanique auxiliaire (Wt) provenant dudit système thermodynamique (46) afin de produire de l'énergie électrique.

10. Equipement selon la revendication 9, dans lequel ledit dispositif de récupération d'énergie (44") comprend une transmission (106), agencée pour transférer ladite puissance mécanique auxiliaire (Wt) vers ledit système de pompage auxiliaire (48, 48') et/ou vers ledit générateur électrique (104).

11. Equipement selon la revendication 10, dans lequel ledit dispositif de récupération d'énergie (44") comprend en outre un moyen d'accouplement (114, 116) agencé pour accoupler et désaccoupler sélectivement ledit système de pompage auxiliaire (48, 48') et ladite transmission (106) et/ou ledit générateur électrique (104) et ladite transmission (106).

12. Equipement selon l'une quelconque des revendications précédentes, comprenant un dispositif d'affichage (120) agencé pour afficher une information représentant la puissance mécanique auxiliaire (Wt) fournie par ledit système thermodynamique (46) et/ou l'énergie qui en est récupérée.

13. Equipement selon la revendication 12, dans lequel ledit système de pompage auxiliaire (48, 48') est agencé pour fonctionner en mode de commande manuelle ; ledit dispositif d'affichage (120), de préférence du type à écran tactile, étant apte à commander ledit moyen formant robinet (82, 84, 86, 88) afin de transmettre l'énergie hydraulique ou la surpression produite par ledit système de récupération d'énergie (44 ; 44' ; 44") à l'un ou plusieurs desdits moyens formant actionneur fluidique ou moyens formant moteur fluidique (14, 20, 26, 30) d'après une sélection réalisée par un utilisateur par l'intermédiaire dudit dispositif d'affichage (120).

14. Equipement (10) selon l'une quelconque des revendications précédentes, dans lequel ledit dispositif de récupération d'énergie (44 ; 44' ; 44") est agencé pour transférer ladite puissance mécanique auxiliaire (Wt) audit moteur à combustion interne (32) par l'intermédiaire d'un système d'entraînement par courroie, qui relie ledit dispositif de récupération d'énergie (44 ; 44' ; 44") à au moins une entrée de puissance présente sur ledit moteur à combustion interne (32).

15. Equipement (10) selon l'une quelconque des revendications 7 à 14, dans lequel l'équipement comprend un agencement de robinet (102) situé en aval de l'accumulateur (92) et agencé pour fournir sélectivement ledit fluide auxiliaire sous pression, stocké dans ledit accumulateur (92), audit au moins un circuit de commande fluidique (36, 38, 40, 42).

16. Equipement selon la revendication 15, dans lequel ledit agencement de robinet (102) est agencé pour fournir sélectivement ledit fluide de travail auxiliaire sous pression audit moyen formant robinet (82, 84, 86, 88).

17. Equipement selon l'une quelconque des revendications 1 à 16, comprenant en outre une table de rotation (28) associée à un dispositif de moteur fluidique correspondant (30) ; ledit système de pompage auxiliaire (48, 48') étant agencé pour diriger au moins une partie dudit fluide de travail auxiliaire sous pression vers ledit dispositif de moteur fluidique (30) associé à ladite table de rotation (28), afin d'augmenter la vitesse de rotation et/ou le couple transmis à un outil d'excavation (22) associé à ladite table de rotation (28).

18. Equipement selon la revendication 4, dans lequel ledit système thermodynamique (46) comprend une turbine (52) pourvue d'un arbre rotatif (60) et ladite au moins une pompe auxiliaire (62) comprend un arbre d'entrée (68) accouplé audit arbre rotatif (60) au moyen d'un réducteur de vitesse (70).
